# EUROPÄISCHE PATENTANMELDUNG

(11) **EP 0 742 168 A2**
(43) Veröffentlichungstag der Anmeldung: **13.11.1996**
(21) Anmeldenummer: 96105931.8
(22) Anmeldetag: 16.04.1996
(51) Int. Cl.: B65G 63/00

(54) **Einrichtung zum Umschlagen von Ladegut zwischen Schienenfahrzeugen und Strassenfahrzeugen bzw. zwischen Strassenfahrzeugen und Schienenfahrzeugen**

(30) Priorität: 22.04.1995 DE 19514870
(71) Anmelder: Krupp Fördertechnik GmbH, 47226 Duisburg (DE)
(72) Erfinder: Wiedeck, Hans-Norbert, Dr.-Ing., 45481 Mülheim an der Ruhr (DE)

(57) **Zusammenfassung**

Bei einer Einrichtung zum Umschlagen von Ladegut in Form von Ladeeinheiten (5), wie Containern, Wechselbehältern, Sattelanhängern o. dgl., zwischen Schienenfahrzeugen (4) und Straßenfahrzeugen (6) bzw. zwischen Straßenfahrzeugen (6) und Schienenfahrzeug (4), unter Verwendung längs des Schienenverkehrsweges (1) und des Straßenverkehrsweges (2) verfahrbarer Umschlaggeräte (7), ist parallel zu dem Schienenverkehrsweg (1) und dem Straßenverkehrsweg (2) eine Transportstrecke für die Aufnahme der von den Schienenfahrzeugen (4) entladenen bzw. auf die Schienen-fahrzeuge (4) zu verladenden Ladeeinheiten (5) vorgesehen, wobei die Transportstrecke als Rollengang (3) ausgebildet sein kann.

## Beschreibung

Die Erfindung betrifft eine Einrichtung zum Umschlagen von Ladegut in Form von Ladeeinheiten, wie Containern, Wechselbehältern, Sattelanhängern o. dgl., zwischen Schienen- und Straßenfahrzeugen bzw. zwischen Straßen- und Schienenfahrzeugen, unter Verwendung längs des Schienen- und Straßenverkehrsweges verfahrbarer Umschlaggeräte

Beim Umschlagen von Ladegut zwischen Schienen- und Straßenfahrzeugen bzw. zwischen Straßen- und Schienenfahrzeugen ist es bisher notwendig, nicht nur die Straßenfahrzeuge, sondern auch die Schienenfahrzeuge zum Stillstand zu bringen, damit mittels der Umschlaggeräte die Ent- bzw. Beladung durchgeführt werden konnte. Dies erfordert lange Stillstandszeiten der Schienenfahrzeuge.

Der Erfindung liegt die Aufgabe zugrunde, die erforderliche Zeit für das Umschlagen von Ladegut zu verkürzen.

Die Lösung der gestellten Aufgabe besteht darin, daß parallel zu dem Schienen- und Straßenverkehrsweg eine Transportstrecke für die Aufnahme der von den Schienenfahrzeugen entladenen bzw. auf die Schienenfahrzeuge zu verladenden Ladeeinheiten vorgesehen ist. Dies ermöglicht eine Ent- bzw. Beladung der Schienenfahrzeuge mittels der verfahrbaren Umschlaggeräte, während sich die Schienenfahrzeuge in Bewegung befinden.

Im Falle einer Beladung der Schienenfahrzeuge werden die Ladeeinheiten vor der Ankunft der Schienenfahrzeuge mittels der Umschlaggeräte von den Straßenfahrzeugen entnommen und auf die Transportstrecke aufgelegt. Von dort werden die Ladeeinheiten - bei Durchfahrt der Schienenfahrzeuge mit geringer Geschwindigkeit durch die Einrichtung - auf die fahrenden Schienenfahrzeuge umgeladen.

Im Falle einer Entladung von Ladeeinheiten von den Schienenfahrzeugen werden die Ladeeinheiten mittels der Umschlaggeräte von den fahrenden Schienenfahrzeugen entnommen und auf die Transportstrecke umgeladen, um später von dort auf die Straßenfahrzege verladen zu werden.

In Ausgestaltung der Erfindung ist die Transportstrecke als Rollengang ausgebildet, wobei die Rollen des Rollengangs zweckmäßigerweise einzeln oder in Gruppen mit einen Antrieb versehen sind, und wobei die Antriebe für die Rollen des Rollengangs einzeln steuerbar sind. Dadurch können die Geschwindigkeiten des Umschlaggerätes und der Schienenfahrzeuge sowie die Umdrehungsgeschwindigkeiten der Rollen gleich groß gewählt werden, so daß sowohl das Ent- bzw. Beladen der Schienenfahrzeuge mittels der Umschlaggeräte als auch das Absetzen bzw. das Abnehmen der Entladeeinheiten auf den bzw. von dem Rollengang mittels der Umschlaggeräte bei relativem Stillstand erfolgt.

In weiterer Ausgestaltung der Erfindung ist an der der Transportstrecke gegenüberliegenden Seite des Straßenverkehrsweges und/oder zwischen der Transportstrecke und dem Straßenverkehrsweg mindestens ein Lager sowie ein an das Lager angrenzender, rechtwinklig zu dem Schienen- und Straßenverkehrsweg verlaufender Querförderer vorgesehen. Dieses Lager dient zur Zwischenlagerung von Ladeeinheiten, die mittels des Querförderers dort abgesetzt bzw. von dort entnommen werden.

Bei einer bevorzugten Ausführungsform der Erfindung sind mindestens zwei Lager vorgesehen, wobei sich zwischen den Lagern rechtwinklig zu dem Schienen- und Straßenverkehrsweg verlaufende Gassen befinden, in denen Querförderer vorgesehen sind.

Eine Einrichtung der eingangs genannten Art, die allein das vorgenannte Merkmal aufweist, ist an sich bereits bekannt. Durch diese bekannte Einrichtung fahren die Schienenfahrzeuge mit einer durchschnittlichen Geschwindigkeit von ca. 0,4 m/s hindurch. Dabei werden die Ladeeinheiten in einem als Rendezvous-Technik bezeichneten Verfahren, während der Zug in Fahrt ist, vom einem Umschlaggerät in der Bewegung erfaßt, zu den Querförderern transportiert und auf diese abgesetzt.

Bei dieser Rendezvous-Technik ist sowohl das Aufnehmen der Ladeeinheiten in der Bewegung als auch das Verfahren der Ladeeinheiten sehr schwierig. Beispielsweise müssen beim Verfahren der Ladeeinheiten Massen von insgesamt bis zu 60 to beschleunigt, längsverfahren, abgebremst, querverfahren und abgesetzt werden.

Die vorgenannten Schwierigkeiten treten bei der erfindungsgemäßen Einrichtung nicht auf. Durch die erfindungsgemäße Einrichtung können die Schienenfahrzeuge taktweise hindurchgefahren werden, und zwar
- im dynamischen Taktbetrieb mit Fahrgeschwindigkeiten von ca. 0,1 m/s im Ladebereich mit anschließendem schnellen Vorziehen des anschließenden noch zu entladenden Teils der Schienenfahrzeuge,
oder
- im Taktbetrieb mit Stillstand, wobei die Schienenfahrzeuge nach Vorziehen in den Ladebereich zum Stillstand kommen.

Die erfindungsgemäße Einrichtung weist gegenüber der bekannten Einrichtung folgende Vorteile auf:
- Es erfolgt keine Beschleunigung hängender Lasten.
- Das Umschlaggerät läßt kurze Verfahrzeiten parallel zum Schienenverkehrsweg zu, da diese Fahrten ohne Nutzlast erfolgen.
- Bei Betriebsstörungen ist die Bewegung der Massen so gering, daß sie im dynamischen Taktbetrieb leicht abzubremsen bzw. im Taktbetrieb mit Stillstand der Schienenfahrzeuge eine Gefährdung von vornherein ausgeschlossen ist.

Noch einfacher wird der Entladevorgang, wenn dieser bei nur unwesentlich verringerter Umschlagleistung konventionell im Stillstand erfolgt.

Nach dem Absetzen der Ladeeinheiten auf die betreffenden Rollen des Rollengangs werden diese auf eine entsprechend ausreichende Fördergeschwindigkeit beschleunigt, vor dem Querförderer abgebremst und auf diesem abgesetzt.

Nach einem weiteren Merkmal der Erfindung ist die Transportstrecke durch als Querförderwagen ausgebildete Transporteinheiten der Querförderer gebildet und sind in den Kreuzungsbereichen der Querförderer und der durch die Querförderwagen gebildeten Transportstrecke entsprechend ausgebildete Umsetzer vorgesehen.

Mit einer derart ausgestalteten Einrichtung ist das Entladen von Ladeeinheiten von den Schienenfahrzeugen und das Verfahren der Ladeeinheiten zum Querförderer besonders einfach durchzuführen.

Zweckmäßigerweise sind die Querförderer bzw. die Querförderwagen so ausgebildet sind, daß sie von Straßenfahrzeugen überfahren werden können. Dadurch wird ermöglicht, auch dann, wenn bei der erfindungsgemäßen Einrichtung die Transportstrecke durch als Querförderwagen ausgebildete Transporteinheiten der Querförderer gebildet ist, zwischen der Transportstrecke und dem Lager bzw. den Lagern einen Straßenverkehrsweg vorzusehen.

Eine besonders einfache Ausführungsform des Gegenstandes der Erfindung besteht darin, daß die Querförderwagen vier Räder für die Bewegung in Längsrichtung der Querförderer aufweisen sowie vier weitere Räder für die Bewegung in Längsrichtung der Transportstrecke, wobei jeweils zwei der Räder mit einem Antrieb versehen sind.

Nach einem weiteren Merkmal der Erfindung besteht der Antrieb der Querförderwagen aus nur einem Motor sowie aus zwei Antriebswellen und einem Getriebe. Dadurch ist die Regelung der Geschwindigkeit und die Bestimmung der Fahrtrichtung der Querförderwagen sehr einfach.

Die Erfindung kann noch dadurch verbessert werden, daß die für die Räder der Querförderwagen vorgesehenen Laufschienen im Bereich der Umsetzer gesonderte Laufschienenabschnitte aufweisen, die derart heb- und senkbar ausgebildet sind, daß sich jeweils ein Paar der Laufschienenabschnitte in Fahrstellung befindet, während das andere Paar der Laufschienenabschnitte abgesenkt ist. Hierdurch ist eine Änderung der Fahrtrichtung der Querförderwagen besonders einfach durchzuführen.

Die Erfindung ist anhand der Zeichnung, in der drei Ausführungsbeispiele der erfindungsgemäßen Umschlageinrichtung schematisch dargestellt sind, näher erläutert.
Es zeigen:
- Fig. 1: eine Draufsicht auf eine Umschlageinrichtung;
- Fig. 2: eine Draufsicht auf eine andere Umschlageinrichtung, die gegenüber der in Fig. 1 dargestellten Umschlageinrichtung um 90° gedreht ist;
- Fig. 3: eine Draufsicht auf eine weitere Umschlageinrichtung, in gleicher Darstellung wie Fig. 2;
- Fig. 4: einen Querförderwagen von unten gesehen, in erheblich größerem Maßstab;
- Fig. 5: einen Längsschnitt durch einen Querförderer mit daran angrenzendem Umsetzer, in einem anderem Maßstab;
- Fig. 6: einen Querschnitt durch den in Fig. 5 dargestellten Querförderer.

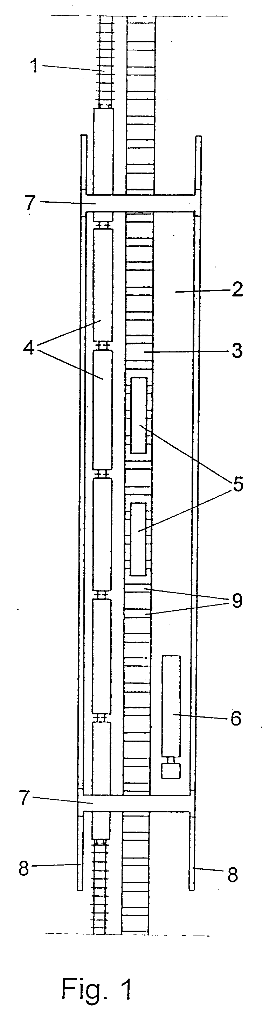

Bei dem in Fig. 1 dargestellten Ausführungsbeispiel ist zwischen einem Schienenverkehrsweg 1 und einem Straßenverkehrsweg 2 eine durch einen Rollengang 3 gebildete Transportstrecke vorgesehen, die dazu dient, von einem Schienenfahrzeug 4 entladene bzw. auf das Schienenfahrzeug 4 zu verladende Ladeeinheiten 5 aufzunehmen. Im Falle einer Beladung der Schienenfahrzeuge 4 mit Ladeeinheiten 5 werden die Ladeeinheiten 5 vor der Ankunft der Schienenfahrzeuge 4 von Straßenfahrzeugen 6 auf den Rollengang 3 aufgelegt und auf die fahrenden Schienenfahrzeuge 4 umgeladen. Im Falle einer Entladung von Ladeeinheiten 5 von den Schienenfahrzeugen 4 werden die Ladeeinheiten 5 von den fahrenden Schienenfahrzeugen 4 auf die Transportstrecke umgeladen. In beiden Fällen erfolgt die Verladung der Ladeeinheiten 5 durch Umschlaggeräte 7, die auf parallel zum Schienenverkehrsweg 1 und zum Straßenverkehrsweg 2 verlaufende Kranlaufschienen 8 verfahrbar sind. Die Rollen 9 des Rollengangs 3 sind einzeln oder in Gruppen mit einer - nicht dargestellten - Antriebseinrichtung verbunden.

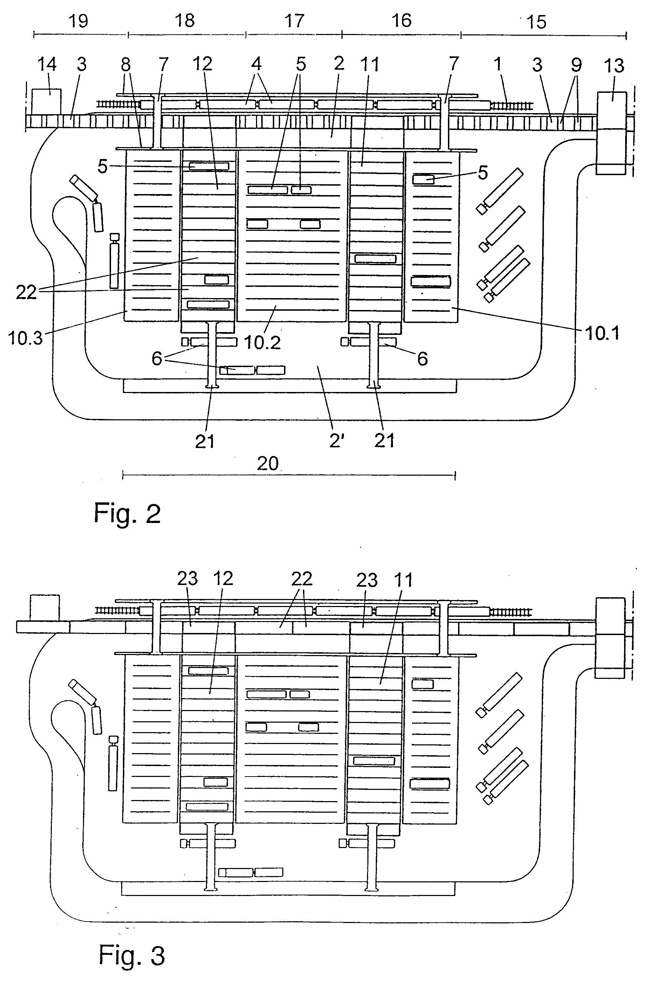

Die in Fig. 2 dargestellte Umschlageinrichtung besteht - wie die in Fig. 1 dargestellte Umschlageinrichtung - im wesentlichen aus einem Schienenverkehrsweg 1, einem Straßenverkehrsweg 2 und einer als Rollengang 3 ausgebildeten Transportstrecke. Zusätzlich sind jedoch drei Lager 10.1, 10.2, 10.3 für die Ladeeinheiten 5 vorgesehen. Die drei Lager 10.1, 10.2, 10.3 sind durch zwei als Gassen bezeichnete Arbeitsräume getrennt, in denen Querförderer 11 und 12 vorgesehen sind. Die Umschlageinrichtung weist ein Gate 13 für die Schienen- und Straßenfahrzeuge 4 und 6 und ein Gate 14 für die Schienenfahrzeuge 4 auf, wobei mit Gate eine Erfassungs- und Meldestelle gemeint ist. Vom Gate 13 bis kurz vor dem Lager 10.1 erstreckt sich eine Vorzone 15, an die sich ein erster Umschlagbereich/Schiene 16 anschließt. Der Umschlagbereich/Schiene 16 verläuft entlang dem Lager 10.1 und dem Querförderer 11. Es folgt dann ein Umrüstungsbereich/Schienenfahrzeuge 17, ein weiterer Umschlagbereich/Schiene 18, der entlang dem Querförderer 12 und dem Lager 10.3 verläuft, sowie eine Nachzone 19, die sich bis zum Gate 14 erstreckt. Auf der gegenüberliegenden Seite der Umschlageinrichtung - in der Zeichnung im unteren Teil - befindet sich ein weiterer Straßenverkehrsweg 2'. Dieser Straßenverkehrsweg 2' bildet einen Umschlagbereich/Straße 20, der sich über die drei Lager 10.1, 10.2 und 10.3 und über die beiden Querförderer 11 und 12 erstreckt.

In den Umschlagbereichen/Schiene 16 und 18 befinden sich die Umschlaggeräte 7. Im Umschlagbereich/Straße 20 sind zum Be- und Entladen der Straßenfahrzeuge 6 zwei weitere Umschlaggeräte 21 vorgesehen, die im Bereich der Querförderer 11 und 12 angeordnet sind.

Die Querförderer 11 und 12 weisen als Querförderwagen 22 ausgebildete Transporteinheiten auf, die - mit eigenem Antrieb - in zwei Ebenen in beiden Richtungen verfahrbar sind.

Bei der in Fig. 3 dargestellten Umschlageinrichtung ist die Transportstrecke durch Querförderwagen 22 gebildet, die gleichzeitig Bestandteil der Querförderer 11 und 12 sind. Ermöglicht wird dies durch entsprechend ausgebildete Umsetzer 23, die in den Kreuzungsbereichen der Querförderer 11 und 12 und dem durch die Querförderwagen 22 gebildeten Transportstrecke angeordnet sind.

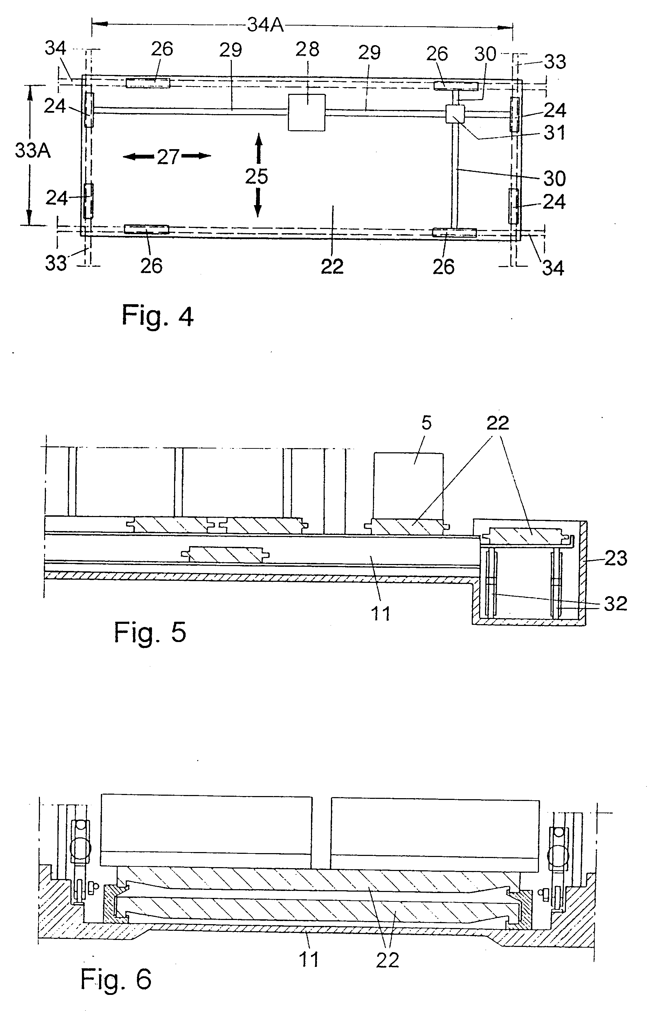

In Fig. 4 ist ein Querförderwagen 22 dargestellt, der mit vier Rädern 24 für die Bewegung des Querförderwagens 22 in Richtung der Pfeile 25 - also in Richtung der Querförderer 11 und 12 (vgl. Fig. 2 und 3) - sowie mit weiteren vier Rädern 26 für die Bewegung des Querförderwagens 22 in Richtung der Pfeile 27 - also in Richtung der durch die Querförderwagen 22 gebildeten Transportstrecke (vgl. Fig. 3) - ausgestattet ist. Der Antrieb von jeweils zwei der Räder 24 und 26 erfolgt durch einen Motor 28 über Antriebswellen 29 und 30, wobei im Kreuzungsbereich der beiden Antriebswellen 29 und 30 ein Getriebe 31 vorgesehen ist.

Wie in Fig. 4 mit gestrichelten Linien angedeutet ist, laufen die Räder 24 des Querförderwagens 22 auf Laufschienen 33 und die Räder 26 des Querförderwagens 22 auf Laufschienen 34. Im Bereich eines Umsetzers 23 (vgl. Fig. 3) weisen die Laufschienen 33 und 34 gesonderte Abschnitte 33A und 34A auf, die heb- und senkbar ausgebildet sind. Beim Einfahren eines Querförderwagens 22 in den Umsetzer 23, beispielsweise über die Laufschienen 33, befinden sich die Abschnitte 33A der Laufschienen 33 in Fahrstellung, während die Abschnitte 34A der quer dazu verlaufenden Laufschienen 34 abgesenkt sind. Sobald der Querförderwagen 22 zum Stillstand kommt, werden die Abschnitte 34A der Laufschienen 34 in Fahrstellung angehoben und die Abschnitte 33A der Laufschienen 33 abgesenkt, so daß die durch die Laufschienen 34 bestimmte Fahrtrichtung freigegeben ist. Beim Einfahren eines Querförderwagens 22 in den Umsetzer 23 über die Laufschienen 34 spielt sich der Vorgang entsprechend ab.

Fig. 5 zeigt einen Querförderer 11 mit daran angrenzendem Umsetzer 23. Der Umsetzer 23 weist eine hydraulische Hubvorrichtung 32 auf, mit der die nach dem Abnehmen der Entladeeinheiten 5 in den Umsetzer 23 einlaufenden Querförderwagen 22 abgesenkt werden.

Aus Fig. 6 ist die Anordnung der Querförderwagen 22 in einem Querförderer 11 zu ersehen. Zur Vereinfachung der Zeichnung sind die Räder der Ouerförderwagen 22 nicht dargestellt worden.

## Patentansprüche

1. Einrichtung zum Umschlagen von Ladegut in Form von Ladeeinheiten, wie Containern, Wechselbehältern, Sattelanhängern o. dgl., zwischen Schienen- und Straßenfahrzeugen bzw. zwischen Straßen- und Schienenfahrzeugen, unter Verwendung längs des Schienen- und Straßenverkehrsweges verfahrbarer Umschlaggeräte, **dadurch gekennzeichnet**, daß parallel zu dem Schienen- und Straßenverkehrsweg (1, 2) eine Transportstrecke für die Aufnahme der von den Schienenfahrzeugen (4) entladenen bzw. auf die Schienenfahrzeuge (4) zu verladenden Ladeeinheiten (5) vorgesehen ist.

2. Einrichtung nach Anspruch 1, dadurch gekennzeichnet, daß die Transportstrecke als Rollengang (3) ausgebildet ist.

3. Einrichtung nach Anspruch 2, dadurch gekennzeichnet, daß die Rollen (9) des Rollengangs (3) einzeln oder in Gruppen mit einen Antrieb versehen sind.

4. Einrichtung nach Anspruch 3, dadurch gekennzeichnet, daß die Antriebe für die Rollen (9) des Rollengangs (3) einzeln steuerbar sind.

5. Einrichtung nach einem der Ansprüche 1 bis 4, dadurch gekennzeichnet, daß an der der Transportstrecke gegenüberliegenden Seite des Straßenverkehrsweges (2) und/oder zwischen der Transportstrecke und dem Straßenverkehrsweg (2') mindestens ein Lager sowie ein an das Lager angrender, rechtwinklig zu dem Schienen- und Straßenverkehrsweg (1, 2) verlaufender Querförderer vorgesehen ist.

6. Einrichtung nach Anspruch 5, dadurch gekennzeichnet, daß mindestens zwei Lager (10.1, 10.2, 10.3) vorgesehen sind, wobei sich zwischen den Lagern (10.1, 10.2, 10.3) rechtwinklig zu dem Schienen- und Straßenverkehrsweg (1, 2) verlaufende Gassen befinden, in denen Querförderer (11, 12) vorgesehen sind.

7. Einrichtung nach Anspruch 5 oder 6, dadurch gekennzeichnet, daß die Transportstrecke durch als Querförderwagen (22) ausgebildete Transporteinheiten der Querförderer (11, 12) gebildet ist und daß in den Kreuzungsbereichen der Querförderer (11, 12) und der durch die Querförderwagen (22) gebildeten Transportstrecke entsprechend ausgebildete Umsetzer (23) vorgesehen sind.

8. Einrichtung nach Anspruch 7, dadurch gekennzeichnet, daß die Querförderer (11, 12) bzw. die Querförderwagen (22) so ausgebildet sind, daß sie von Straßenfahrzeugen (6) überfahren werden können.

9. Einrichtung nach Anspruch 7 oder 8, dadurch gekennzeichnet, daß die Querförderwagen (22) vier Räder (24) für die Bewegung in Längsrichtung der Querförderer (11, 12) aufweisen sowie vier weitere Räder (26) für die Bewegung in Längsrichtung der Transportstrecke, wobei jeweils zwei der Räder (24, 26) mit einem Antrieb versehen sind.

10. Einrichtung nach Anspruch 9, dadurch gekennzeichnet, daß der Antrieb der Querförderwagen (22) aus nur einem Motor (28) sowie aus zwei Antriebswellen (29 und 30) und einem Getriebe (31) besteht.

11. Einrichtung nach Anspruch 9 oder 10, dadurch gekennzeichnet, daß die für die Räder (24, 26) der Querförderwagen (22) vorgesehenen Laufschienen (33, 34) im Bereich der Umsetzer (23) gesonderte Laufschienenabschnitte (33A, 34A) aufweisen, die derart heb- und senkbar ausgebildet sind, daß sich jeweils ein Paar der Laufschienenabschnitte (33A bzw. 34A) in Fahrstellung befindet, während das andere Paar der Laufschienenabschnitte (33A bzw. 34A) abgesenkt ist.
